# EUROPÄISCHE PATENTANMELDUNG

(11) **EP 3 415 269 A1**
(43) Veröffentlichungstag der Anmeldung: **19.12.2018**
(21) Anmeldenummer: 18177283.1
(22) Anmeldetag: 12.06.2018
(51) Int. Cl.: B23Q 3/157, B23Q 39/02, B23Q 3/155, B23B 29/26

(54) **WERKZEUGMASCHINE ZUR SPANABHEBENDEN BEARBEITUNG EINES WERKSTÜCKS MITTELS EINES WERKZEUGES**

(30) Priorität: 12.06.2017 DE 102017209845
(71) Anmelder: DECKEL MAHO Pfronten GmbH, 87459 Pfronten (DE)
(72) Erfinder: Geißler, Alfred, 87459 Pfronten (DE); Jung, Robert, 87459 Pfronten (DE)
(74) Vertreter: MERH-IP Matias Erny Reichl Hoffmann Patentanwälte PartG mbB

(57) **Zusammenfassung**

Die Erfindung betrifft eine Werkzeugmaschine zur spanabhebenden Bearbeitung eines Werkstücks mittels eines Werkzeuges, wobei die Werkzeugmaschine dazu eingerichtet ist, das Werkzeug für die maschinengesteuerte Bearbeitung im Rahmen eines Bearbeitungsprogramms an der Arbeitsspindel einzuspannen und das Werkzeug auf dem Maschinentisch der Werkzeugmaschine aufzuspannen, gekennzeichnet durch einen auf dem Maschinentisch befestigbaren Werkzeugspeicher, auf dem ein Werkzeug oder eine Mehrzahl an Werkzeugen einzeln auswechselbar aufspannbar sind.

## Beschreibung

Die Erfindung betrifft eine Werkzeugmaschine zur spanabhebenden Bearbeitung eines Werkstücks mittels eines Werkzeugs, wobei die Werkzeugmaschine dazu eingerichtet ist, das Werkstück für die maschinengesteuerte Bearbeitung im Rahmen eines Bearbeitungsprogramms an der Arbeitsspindel einzuspannen und das Werkzeug auf dem Maschinentisch der Werkzeugmaschine aufzuspannen.

Eine derartige Werkzeugmaschine der Anmelderin ist in dem europäischen Patent EP 2 269 770 beschrieben. Sie dient der Bearbeitung von Zahnrädern, wie zum Beispiel Tellerrädern, Ritzel-, oder Kegelrädern an einer 5 Achsen umfassenden Werkzeugmaschine mit einem Zahnform-Messerkopf, der auf dem Maschinentisch befestigt ist. Diese Maschine eignet sich insbesondere für eine aufeinanderfolgende Bearbeitung von einer Mehrzahl von Werkstücken an einer Werkzeugmaschine, bei der für die Bearbeitung der einzelnen Werkstücke nur ein Werkzeug oder zumindest nur wenige Werkzeuge erforderlich sind. Hierzu weist die Werkzeugmaschine ein Werkzeugspannmittel auf, das dazu geeignet ist, das Werkzeug am Drehtisch der Werkzeugmaschine einzuspannen, insbesondere das Werkzeug auf dem Drehtisch drehfest einzuspannen, wobei der Drehtisch dazu ausgelegt ist, das mittels des Einspannmittels gespannte Werkzeug rotatorisch anzutreiben. Somit kann die rotatorische Bewegung des Werkzeugs unmittelbar durch die Bewegung des Drehtischs realisiert werden. Auch kann das Einspannmittel als eine Werkzeugvorrichtung ausgestaltet sein, die ein Bearbeitungsmittel zum Bearbeiten eines Werkstücks, sprich ein Werkzeug, und ein Antriebsmittel zum Antreiben des Bearbeitungsmittels umfasst. Auf diese Weise können sowohl Fräs- als auch Bohrbearbeitung realisiert werden.

Diese in dem oben genannten Patent beschriebene Werkzeugmaschine eignet sich damit insbesondere zur Bearbeitung von Zahnrädern über aus dem Stand der Technik bekannte Verfahren, wie zum Beispiel das Gleason- oder das Klingelnberg-Verfahren über eine Fräs- /Drehwerkzeugmaschine oder ein Universal-Bearbeitungszentrum.

In der heutigen werkzeugmaschinengesteuerten Fertigung von Bauteilen ist die Fertigungseffizienz ein entscheidender Faktor, insbesondere bei der Fertigung von Maschinenteilen mit komplexer Geometrie.

Aufgabe der vorliegenden Erfindung ist es daher, eine Werkzeugmaschine und ein Verfahren zur Bearbeitung eines Werkstücks an einer Werkzeugmaschine anzugeben, mittels derer das oben beschriebene Prinzip der "umgekehrten Einspannung von Werkstück und Werkzeug" im Hinblick auf die Fertigungseffizienz erweitert werden kann.

Die Aufgabe wird gelöst durch eine Werkzeugmaschine mit den Merkmalen von Patentanspruch 1 und einem Verfahren zur Bearbeitung eines Werkstücks an einer Werkzeugmaschine mit den Merkmalen des Patentanspruchs 11.

Vorteilhafte Ausgestaltungen der Erfindung werden durch die Gegenstände der Unteransprüche angeben.

Die Erfindung stellt eine Werkzeugmaschine zur spanabhebenden Bearbeitung eines Werkstücks mittels eines Werkzeugs bereit, die dazu eingerichtet ist, das Werkstück für die maschinengesteuerte Bearbeitung im Rahmen eines Bearbeitungsprogramms an der Arbeitsspindel einzuspannen und das Werkzeug auf dem Maschinentisch der Werkzeugmaschine aufzuspannen, wie sie als gattungsgemäße Maschine aus dem oben beschriebenen Stand der Technik bekannt ist.

Erfindungsgemäß ist auf dem Maschinentisch der Werkzeugmaschine ein Werkzeugspeicher vorgesehen, der auf dem Maschinentisch befestigt werden kann und auf oder an dem ein Werkzeug oder eine Mehrzahl von Werkzeugen einzeln wechselbar aufgespannt werden können. Zu diesem Zweck weist der erfindungsgemäße Werkzeugspeicher Spannmittel auf, mittels derer unterschiedliche Werkzeuge einzeln aufgespannt werden können.

Über diese Spannmittel können Werkzeuge an dem erfindungsgemäßen Werkzeugspeicher einzeln gewechselt werden, ohne dass der Werkzeugspeicher vom Maschinentisch entfernt werden muss. Gleichzeitig wird über den erfindungsgemäßen Werkzeugspeicher jedoch auch eine gemeinsame Auswechslung einer Mehrzahl von Werkzeugen ermöglicht, indem der Werkzeugspeicher vom Maschinentisch abgehoben und gegen einen anderen Werkzeugspeicher ausgetauscht wird.

Mit anderen Worten besteht das Grundkonzept der vorliegenden Erfindung darin, nicht einfach auf einem Maschinentisch ein Spannmittel vorzusehen mittels dessen Werkzeuge gespannt werden können, sondern vielmehr darin, die Werkzeugschnittstelle dahingehend zur modifizieren, dass sie zum Einen das Spannmittel und zum Anderen einen Speicher/Träger umfasst, der direkt auf den Maschinentisch, der ja bei der herkömmlichen Nutzung der Werkzeugmaschine dem Aufspannen des Werkstücks dient, montierbar ist. Auf diese Weise kann dieser erweiterten Werkzeugschnittstelle eine erheblich vergrößerte Funktionalität zugewiesen werden, da es unter anderem möglich ist, mehrere Werkzeuge aufzuspannen, sowie einen vorhandenen Antriebsmechanismus des Tischs zu nutzen und/oder aber zusätzliche Antriebsmechanismen, die in diese Werkzeugschnittstelle (Werkzeugspeicher) integriert sind. Zudem wird eine Vormontage der Werkzeuge an der erweiterten Schnittstelle (Werkzeugspeicher) möglich, so dass eine Art vorweggenommene Aufspannung des Werkzeugs ermöglicht wird, da die Befestigung des Werkzeugspeichers (d.h. der erweiterten Werkzeugschnittstelle) auf dem Maschinentisch in anderer Weise erfolgen kann als die Aufspannung des Werkzeugs selbst.
Hierdurch wird das Konzept der "umgekehrten Aufspannung" von Werkzeug und Werkstück, wie sie beispielsweise aus dem oben erläuterten Stand der Technik der Anmelderin bekannt ist, wesentlich erweitert, da zudem eine Vielzahl unterschiedlicher Werkzeuge über den erfindungsgemäßen Werkzeugspeicher auf dem Maschinentisch gemeinsam oder getrennt in zeitlicher Hinsicht vorgesehen werden können. Die Mehrzahl an Spannmittel erlaubt es, gleichzeitig Fräs-, Bohr-, Dreh- und/oder Schleifwerkzeuge über den erfindungsgemäßen Werkzeugspeicher auf dem Maschinentisch vorzulegen. Auf diese Weise kann ein an der Arbeitsspindel eingespanntes Werkstück in zeitlich unmittelbarer Folge hintereinander unterschiedlichen Bearbeitungen wie zum Beispiel Bohren, Fräsen Schleifen und/oder Drehen unterzogen werden. Auf diese Weise wird die Variabilität der Bearbeitung insbesondere in einem vorgegebenen Zeitintervall wesentlich erhöht.

Ein besonderer Vorteil des erfindungsgemäßen Werkzeugspeichers ist darin zu sehen, dass er es ermöglicht, unterschiedlichste Werkzeuge gleichzeitig vorzusehen, wobei zum Einsatz dieser unterschiedlichen Werkzeuge nahezu keine (zusätzlichen) Verfahrwege realisiert werden müssen, da die verschiedenen Werkzeuge gemeinsam durch den Werkzeugspeicher bereitgestellt werden. Ein weiterer wesentlicher Vorteil des erfindungsgemäßen Werkzeugspeichers ist darin zu sehen, dass die aufgespannten Werkzeuge gleichzeitig mit dem Werkzeugspeicher von dem Maschinentisch abgenommen oder aufgesetzt werden können. Auf diese Weise können sonst übliche, zeitintensive Wechselvorgänge, die beim Einwechseln neuer Werkzeuge an der Arbeitsspindel vonnöten wären, verhindert werden, und die erforderlichen Taktzeiten können um mehrere Größenordnungen reduziert werden.

Der erfindungsgemäße Werkzeugspeicher kann dabei unterschiedliche Strukturen aufweisen. Im einfachsten Fall kann es sich um eine einfache Palette handeln. Bei einem bevorzugten Ausführungsbeispiel ist er dergestalt ausgebildet, dass unterschiedliche Werkzeuge in verschiedenen Richtungen auf dem Werkzeugspeicher aufgespannt werden können. Dies ist insbesondere sinnvoll, wenn Fräs-, Schleif, Bohr- und/oder Drehwerkzeuge gemeinsam aufgespannt werden, da auf diese Weise die für die unterschiedlichen Bearbeitungsvorgänge notwendige Orientierung des Werkzeugs relativ zu dem in der Arbeitsspindel aufgespannten Werkstück in einfacher Weise realisiert werden kann. Zu diesem Zwecke kann der erfindungsgemäße Werkzeugspeicher beispielsweise einen im Wesentlichen rechteckigen oder würfelförmigen Grundkörper aufweisen, wobei beispielsweise an dessen Außenflächen jeweils ein Spannmittel zum Aufspannen eines Werkzeugs vorgesehen ist.

Durch die Geometrie des Grundkörpers ergibt sich dabei zwangsläufig eine unterschiedliche Orientierung der verschiedenen Werkzeuge, die auf den verschiedenen Seiten des Grundkörpers mittels der Spannmittel montierbar sind. Die Würfel- oder Rechtecksgeometrie sind hierbei natürlich nur beispielhaft und der Grundkörper kann jegliche andere Geometrie aufweisen, die eine optimierte Orientierung der auf an dem erfindungsgemäßen Werkzeugspeicher aufgespannten Werkzeuge ermöglicht. Die Würfel- bzw. Rechtecksgeometrie sind jedoch insbesondere deswegen vorteilhaft, da sie in einfacher Weise eine Orientierung der Längsachsen der Werkzeuge in Form eines rechtwinkligen Koordinatensystems ermöglichen, was die räumliche Freiheit bei der Einzelbearbeitung des Werkstücks durch die unterschiedlichen an dem erfindungsgemäßen Werkzeugspeicher aufgespannten Werkzeuge erhöht, so dass insbesondere möglichen Kollisionen des an der Arbeitsspindel aufgespannten Werkstücks mit den in dem erfindungsgemäßen Werkzeugspeicher aufgespannten Werkzeugen, insbesondere wenn es mehrere, größere Werkzeuge sind, verhindert werden können.

Eine besonders vorteilhafte Ausgestaltung der erfindungsgemäßen Werkzeugmaschine mit dem auf dem Maschinentisch montierten Werkzeugspeicher ergibt sich, wenn der Maschinentisch als Schwenkrundtisch ausgebildet ist. Auf diese Weise kann durch Verkippung oder Verschwenken des Tisches ebenfalls die Orientierung des Werkzeugs im Verhältnis zum Werkstück verändert werden, so dass im Hinblick auf die möglich Orientierung des Werkzeugs und insbesondere die hierdurch bedingten Verfahrwege neue Freiheitsgrade resultieren, die verkürzte Verfahrwege ermöglichen sowie das Spektrum möglicher Orientierungen des Werkzeugs im Verhältnis zum Werkstück wesentlich erhöhen. Dies ist insbesondere bei der Bearbeitung komplexer Kleinstgeometrien von entscheidendem Vorteil, was die zeitliche Effizienz anbetrifft. Ohne Weiteres wird hier ersichtlich, dass insbesondere die Kombination eines erfindungsgemäßen Werkzeugspeichers, der ein Aufspannen der Werkzeuge in unterschiedlichen Richtungen ermöglicht mit einem Schwenkrundtisch die Bandbreite möglicher Orientierungen und Verfahrwege noch einmal wesentlich erhöht. Insbesondere bei der vollautomatisierten Fertigung von Bauteilen, die einem Werkstückspeicher entnommen werden, können auf diese Weise die Bearbeitungszeiten wesentlich verkürzt werden, insbesondere wenn neben der Fräsbearbeitung beispielsweise auch eine Bohr-, Schleif-oder Drehbearbeitung vorgenommen werden soll.

Bei einer bevorzugten Ausführungsform des erfindungsgemäßen Werkzeugspeichers weist dieser gesonderte Antriebsmittel auf, die einen Antrieb einzelner oder mehrerer Werkzeuge unabhängig von der Bewegung des Maschinentischs ermöglichen. Dabei ist das Antriebsmittel zweckmäßig innerhalb des Grundkörpers des erfindungsgemäßen Werkzeugspeichers vorgesehen und kann etwa über Riemen etc., erfolgen. Dabei kann ein gegebenenfalls zustellbares Getriebe vorgesehen sein, um das Übersetzungsverhältnis des Antriebs entsprechend anzupassen. Bei einer zweckmäßigen Ausführungsform ist der erfindungsgemäße Werkzeugspeicher beispielsweise als Revolver ausgestaltet, mittels dessen die Werkzeuge entsprechend angetrieben/und oder gewechselt werden können. Auf diese Weise ergibt sich zusätzlich zu dem Antrieb über den Maschinentisch die Möglichkeit einen weiteren Antrieb mit anderer Drehzahl und Übersetzungsverhältnis in dem erfindungsgemäßen Werkzeugspeicher zu integrieren. Auch dies vergrößert die Einsatzmöglichkeiten unterschiedlicher Werkzeuge erheblich, da naturgemäß unterschiedliche Werkzeuge verschiedene Drehzahlen und Drehmomente benötigen.

Dabei muss das Antriebsmittel nicht zwangsläufig nur dem Antrieb des Werkzeugs dienen, es kann auch so ausgestaltet sein, dass es die Relativposition des Werkzeugs in Bezug auf das Werkstück ändert, indem beispielsweise der Revolver rototiert oder ein als Quader oder Würfel ausgestalteter Werkzeugspeicher um beispielsweise 90° oder einen beliebigen anderen Winkel gedreht wird, um ein anderes Werkzeug in eine Bearbeitungsposition an der Arbeitsspindel zu verbringen.

Bei Ausführungsbeispielen bei denen der erfindungsgemäße Werkzeugspeicher auf einer Palette integriert ist oder selbst in Form einer Palette ausgebildet ist, wird bei einem zweckmäßigen Ausführungsbeispiel der erfindungsgemäßen Werkzeugmaschine ein Palettenwechsler vorgesehen, mittels dessen die auf der Palette ausgespannten Werkzeuge durch andere Paletten, die ebenfalls mit dem erfindungsgemäßen Werkzeugspeicher ausgestattet sein können, ausgewechselt werden können. Vorteilhafterweise wird hierzu ebenfalls ein Rund- oder ein Linearspeicher zum Wechseln der Paletten im Rahmen einer automatisierten Einwechslung einer Vielzahl von Werkzeugen, die auf den Paletten vorgespannt sind, vorgenommen. Auf diese Weise wird es möglich, in bislang nicht gekannter Zeitkürze eine Vielzahl von Werkzeugen in die erfindungsgemäße Werkzeugmaschine einzuwechseln, so dass die Möglichkeiten einer Werkstückbearbeitung in einem vorgegebenen Zeitmaß um Größenordnung verbessert werden, da keine Werkzeugwechsel durchgeführt werden müssen.

Eine weitere Verkürzung der Prozesszeiten bei der Bearbeitung mehrerer Werkstücke in Serie ergibt sich bei der erfindungsgemäßen Werkzeugmaschine durch Einsatz eines Radmagazins, das für die Speicherung einer Vielzahl von Werkstücken und/oder Werkzeugen eingerichtet sein kann, sowie einer Wechseleinrichtung (zum Beispiel Manipulator oder dergleichen) mittels derer die Werkstücke aus dem Radmagazin in die Arbeitsspindel und/oder den Werkzeugspeicher ein- und ausgewechselt werden können.

Grundsätzlich ist die Erfindung nicht auf den Einsatz eines Radmagazins beschränkt. Es können, soweit sinnvoll oder vorhanden, auch Kettenmagazine oder andere übliche Magazine eingesetzt werden. Entscheidend jedoch ist, dass diese zur Aufnahme von Werkstücken ausgelegt sind. Ein Radmagazin bietet dabei den Vorteil, dass auch größere Werkstücke gespeichert werden können, da entlang der Umfangsfläche des Rades ausreichend Platz vorhanden ist. In diesem Zusammenhang ist es möglich, bei größeren Werkstücken nicht jeden Aufnahmeplatz des Radmagazins zu bestücken.

Bei einer weiteren Ausführungsform der erfindungsgemäßen Werkzeugmaschine kann das Radmagazin ebenfalls zur Aufnahme von Werkzeugen eingerichtet sein und die Wechseleinrichtung ist ferner dazu konfiguriert, neben den Werkstücken auch Werkzeuge aus dem Radmagazin in die Arbeitsspindel ein- oder auszuwechseln. In analoger Weise können sowohl der erfindungsgemäße Werkzeugspeicher als auch die Arbeitsspindel dazu eingerichtet sein, entsprechende Einspannmittel sowohl für Werkzeuge, als auch für Werkstücke aufzuweisen. Hierbei kann es sich beispielsweise um konventionelle Werkzeug-Schnittstellen, wie HSK (Hohlschaftkegel)-Schnittstellen oder dergleichen handeln. Über entsprechende Werkzeug-Schnittstellen kann das Werkstück, in analoger Weise zu einem Werkzeug, in der Arbeitsspindel gehaltert sein. Auf diese Weise ist ein hohes Maß an Variabilität gewährleistet.

Mit anderen Worten ist die erfindungsgemäße Werkzeugmaschine vorzugsweise dazu eingerichtet sein, sowohl auf dem Maschinentisch (über den erfindungsgemäßen Werkzeugspeicher), als auch in einem zugehörigen Magazin, wie zum Beispiel dem oben erwähnten Radmagazin, sowohl Werkstücke, als auch Werkzeuge vorzulegen. Auf diese Weise wird eine höchstmögliche Variabilität bei stark minimierten Verfahrwegen sowohl von Werkstück als auch Werkzeug beim Wechsel von Werkzeug und Werkstück aus der erfindungsgemäßen Werkzeugmaschine realisiert.

Die Erfindung umfasst zudem ein Verfahren zur Bearbeitung eines Werkstücks an einer Werkzeugmaschine mit den Schritten: Bereitstellen einer Vielzahl von Werkstücken in einem Magazin, Einwechseln eines der Werkstücke in die Arbeitsspindel der Werkzeugmaschine, Bereitstellen eines auf einem Maschinentisch der Werkzeugmaschine montierten Werkzeugspeichers mit einem einzelnen Werkzeug oder einer Mehrzahl von Werkzeugen und Bearbeiten des in der Arbeitsspindel eingespannten Werkstücks mit einem der in dem Werkzeugspeicher gespeicherten Werkzeuge.

Das erfindungsgemäße Verfahren ermöglicht eine Bearbeitung einer Vielzahl von Werkstücken in kurzer Folge bei geringen Wechsel- und Verfahrzeiten auf unterschiedliche Weise. Ein besonderer Vorzug des erfindungsgemäßen Verfahrens ist darin zu sehen, dass auch unterschiedliche Bearbeitungsschritte, wie z. B. Drehen, Schleifen, Bohren, Fräsen durch Werkzeuge vorgenommen werden können, die gemeinsam in dem Werkzeugspeicher aufgespannt sind.

Dies wird durch eine Ausführungsform des erfindungsgemäßen Verfahrens bewerkstelligt, bei der ein in der Arbeitsspindel aufgespanntes Werkstück durch verschiedene in dem Werkzeugspeicher gespeicherten Werkzeuge bearbeitet wird, wobei mindestens zwei Werkzeuge aus der Gruppe Fräsbearbeitung, Fräs-, Schleif-, Dreh- und Bohrbearbeitung Verwendung finden.

Bei einer besonders vorteilhaften Ausführungsform des erfindungsgemäßen Verfahrens sind in dem Werkzeugspeicher nicht nur Werkzeuge, sondern auch Werkstücke aufgespannt, so dass mit einer Werkzeugmaschinenkonfiguration Bearbeitungen vorgenommen werden können, bei denen Werkzeug bzw. Werkstück wechselnd in Arbeitsspindel oder Werkzeugspeicher vorgelegt sind.

Ein wesentlicher Vorteil der erfindungsgemäßen Lösung liegt mithin in der Umsetzung der Erkenntnis, dass durch Bereitstellen von Werkzeugen durch den erfindungsgemäßen Werkzeugspeicher im Bereich des Maschinentisches unterschiedliche Bearbeitungsschritte durch verschiedene Werkzeuge durchgeführt werden können, ohne dass entsprechende Wechselvorgänge, und /oder aufwendige Verfahrwege der Werkzeuge zur Positionierung in der Bearbeitungsposition am Werkstück vonnöten sind.

### Beispielsbeschreibung

Weitere Einzelheiten der vorliegenden Erfindung werden im Folgenden anhand konkreter Ausführungsbeispiele unter Bezugnahme auf die Figuren beschrieben, von denen
- **Figur 1a**: ein erstes Ausführungsbeispiel einer erfindungsgemäßen Werkzeugmaschine mit erfindungsgemäßem Werkzeugspeicher und Radmagazin in räumlicher Darstellung zeigt,
- **Figur 1b**: ein Vergrößerungsausschnitt aus der Figur 1a, der ein an der Arbeitsspindel befestigtes Werkstück und ein an dem Werkzeugspeicher befestigtes Drehwerkzeug veranschaulicht,
- **Figur 1c**: eine Seitenansicht eines Ausschnittes der in Figur 1a gezeigten erfindungsgemäßen Werkzeugmaschine zeigt,
- **Figur 2a**: eine weitere Konfiguration einer erfindungsgemäßen Werkzeugmaschine zeigt, bei der ein an der Arbeitsspindel befestigtes Werkstück einer Bohrbearbeitung in vertikaler Richtung unterzogen wird,
- **Figur 2b**: eine weitere Konfiguration einer erfindungsgemäßen Werkzeugmaschine zeigt, bei der ein an der Arbeitsspindel befestigtes Werkstück einer Drehbearbeitung in horizontaler Richtung unterzogen wird,
- **Figur 2c**: eine weitere Konfiguration einer erfindungsgemäßen Werkzeugmaschine zeigt, bei der ein an der Arbeitsspindel befestigtes Werkstück einer Bohrbearbeitung in horizontaler Richtung unterzogen wird,
- **Figur 3a**: ein Ausführungsbeispiel einer erfindungsgemäßen Werkzeugmaschine zeigt, wobei ein erfindungsgemäßer Werkzeugspeicher auf einer Palette angeordnet ist, die von einem NC-Rundtisch getragen wird,
- **Figur 3b**: ein weiteres Ausführungsbeispiel einer erfindungsgemäßen Werkzeugmaschine zeigt, bei der der Maschinentisch als Schwenk-Rundtisch ausgebildet ist, wobei die Darstellung den Schwenk-Rundtisch in einer Liegestellung A = 0° zeigt,
- **Figur 3c**: ein weiteres Ausführungsbeispiel einer erfindungsgemäßen Werkzeugmaschine zeigt, bei der der Maschinentisch als Schwenk-Rundtisch ausgebildet ist, wobei die Darstellung den Schwenk-Rundtisch in einer Liegestellung A = 90° zeigt,
- **Figur 4a**: ein weiteres Ausführungsbeispiel der erfindungsgemäßen Werkzeugmaschine zeigt, bei der der Werkzeugspeicher auf einer Palette montiert ist und zu dem ein Palettenwechsler vorgesehen ist,
- **Figur 4b**: einen Rundspeicher zur Aufnahme einer Mehrzahl von Paletten zur Einwechslung in einer erfindungsgemäßen Werkzeugmaschine zeigt, und
- **Figur 5**: ein Ablaufdiagramm eines Ausführungsbeispiels eines erfindungsgemäßen Verfahrens zur Bearbeitung eines Werkstücks an einer Werkzeugmaschine zeigen.

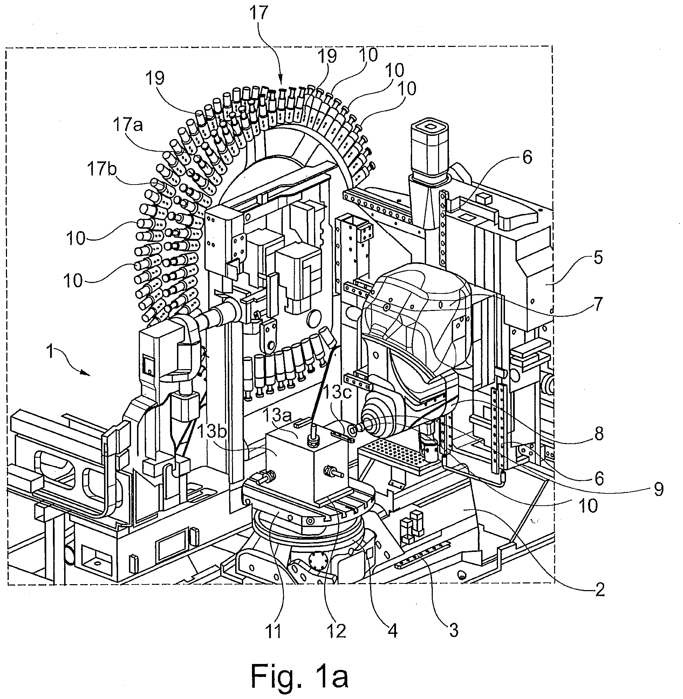

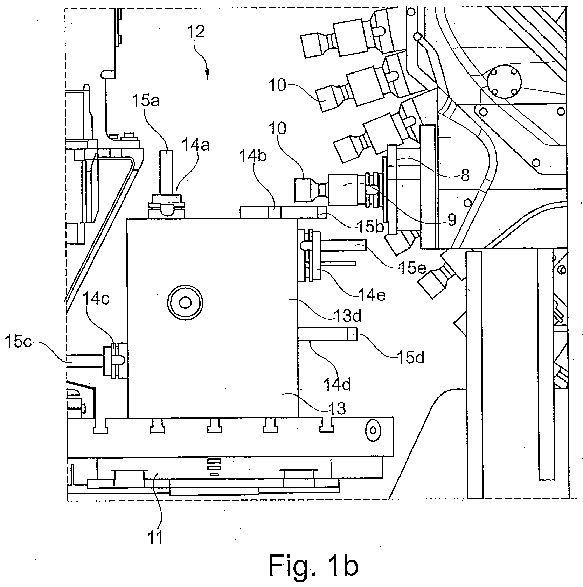

Figur 1a zeigt das Ausführungsbeispiel einer erfindungsgemäßen Werkzeugmaschine in perspektivischer Darstellung. Die Werkzeugmaschine 1 umfasst ein Maschinenbett 2, auf dem in Führungen 3 ein Maschinentisch 4 gelagert ist. Das Maschinengerüst der erfindungsgemäßen Werkzeugmaschine 1 umfasst zudem einen vertikalen Ständer 5, an dem Führungen 6 angebracht sind, mittels derer eine Arbeitsspindel 7 in vertikaler Richtung verfahren werden kann. Die Arbeitsspindel 7 weist einen Spindelkopf 8 auf, in dem eine HSK-Schnittstelle 9 (vgl. Figur 1b) gehaltert wird, mittels derer ein Werkstück 10 in der Arbeitsspindel 7 gespannt ist.

Auf dem Maschinentisch 4 ist eine Palette 11 mit einem Werkzeugspeicher 12 angeordnet ist, der drehfest auf der Palette 11 montiert ist. Der Werkzeugspeicher 12 hat einen rechteckigen Grundkörper 13, an dessen Seiten - bzw. Oberflächen 13a, 13b und 13c (Figur 1a) jeweils Spannmittel 14a, 14b, 14c, 14d, 14e und 14f vorgesehen sind in denen in verschiedene Richtungen Werkzeuge 15a eingespannt sind.

Dabei handelt es sich bei den Werkzeugen 15b und 15d um Drehwerkzeuge, während die Werkzeuge 15a, 15c, 15e und 15f als Bohrwerkzeuge ausgebildet sind. Die Erfindung ist jedoch nicht hierauf begrenzt und es könnten ebenfalls Fräswerkzeuge oder Schleifwerkzeuge in dem Werkzeugspeicher 2 gehaltert sein.

Die erfindungsgemäße Werkzeugmaschine 1 umfasst zudem ein Radmagazin 17 mit zwei hintereinandergeschalteten Rädern 17a und 17b, die entlang ihres Umfangs eine Vielzahl an Werkstücken 10 in entsprechenden Werkstückspeichern 19 bereitstellen. Eine Handling-Einrichtung in Form eines Wechslers 22 ist vorgesehen, um die einzelnen Werkstücke 10 aus den Werkstückspeichern 19 des Radmagazins 17 in den Spindelkopf 8 einzuwechseln.

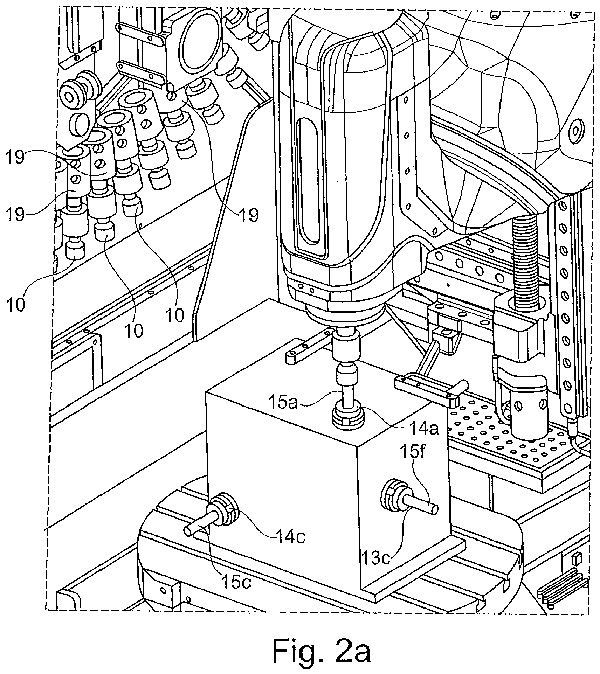

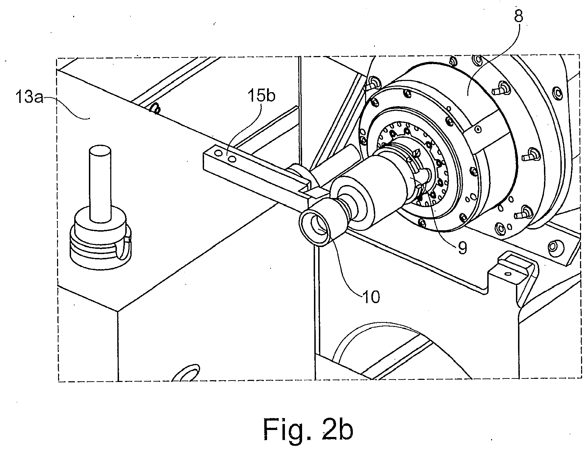

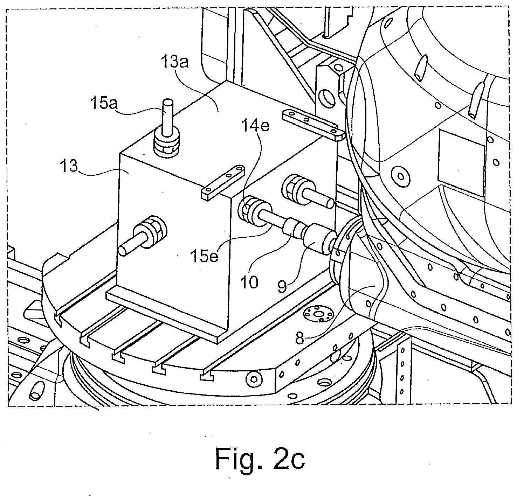

In Figuren 2a bis 2c sind verschiedene Bearbeitungen des in dem Spindelkopf 8 mittels HSK-Schnittstelle 9 aufgespannten Werkstücks 10 veranschaulicht. Die Darstellungen veranschaulichen, dass für den erfindungsgemäßen Werkzeugspeicher 12 mit den in verschiedenen Richtungen orientierten Werkzeugen 15a bis 15e unterschiedliche Bearbeitungsweise vorgenommen werden können. So ist beispielsweise in Figur 2a ein Bohren des Werkstücks in Vertikalrichtung, und in Figur 2b eine Drehbearbeitung des Werkstücks mit einem horizontal eingespannten Werkzeug in horizontaler Richtung veranschaulicht und in Figur 2c eine Bohrbearbeitung des Werkstücks 10 mittels Werkzeug 15 veranschaulicht.

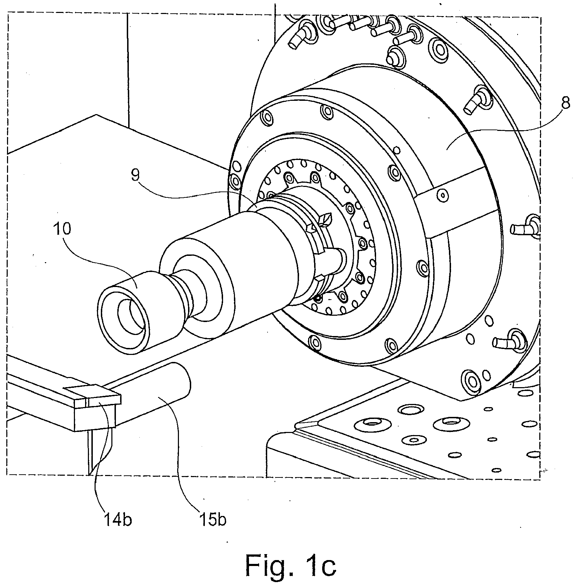

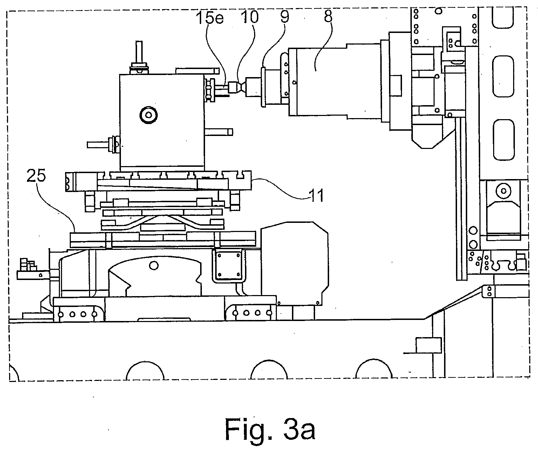

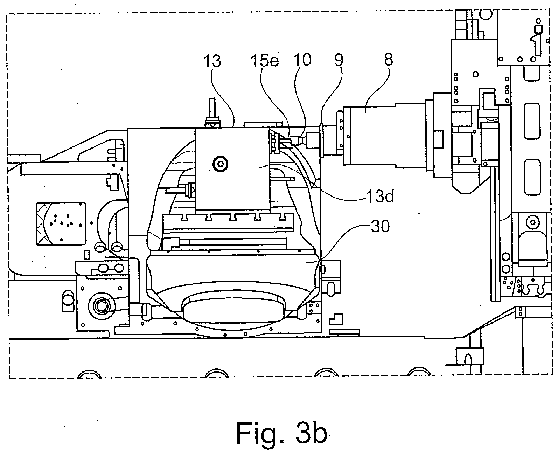

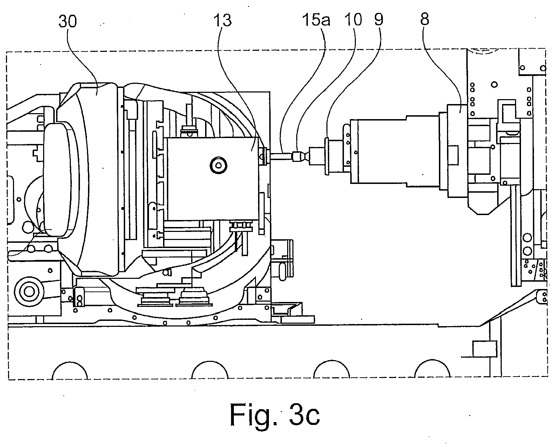

Figur 3a zeigt ein Beispiel, bei dem ein erfindungsgemäßer Werkzeugspeicher 13 auf einem NC-Rundtisch 25 angeordnet ist. Im Gegensatz dazu zeigen die Figuren 3b und 3c eine Konfiguration der erfindungsgemäßen Werkzeugmaschine, bei der der erfindungsgemäße Werkzeugspeicher 13 auf einem Schwenk-Rundtisch 30 angeordnet ist, wobei in Figur 3b der Schwenkrundtisch in einer Winkelstellung 0°, also parallel zum Maschinenbett dargestellt ist, während er in der Darstellung der Figur 3c um 90° verkippt ist. Die Darstellungen in Figuren 3a, b und c zeigen, dass eine Bearbeitung des in der Arbeitsspindel 7 eingespannten Werkstücks 10 oder 11 mittels unterschiedlicher Werkzeuge 15d (in Figur 3b) bzw. 15b (in Figur 1c) möglich sind bei gleichbleibender relativer Positionierung der Arbeitsspindel 7 einzig durch 90° Verschwenken des Schwenk-Rundtisches 30.

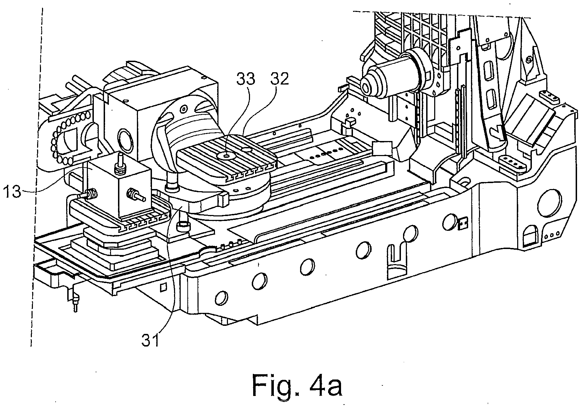

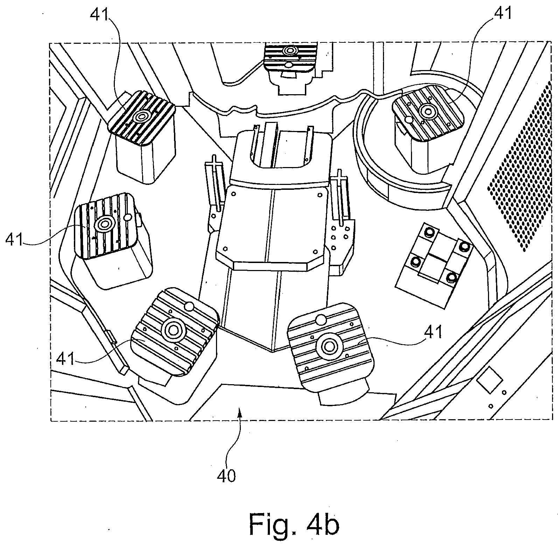

Figur 4 zeigt ein Ausführungsbeispiel einer erfindungsgemäßen Werkzeugmaschine, bei der ein Palettenwechsler 31 vorgesehen ist, über den eine Wechselpalette 32 eingewechselt werden kann. Auf der Wechselpalette 32 ist ein Einspannmittel 33 vorgesehen, mittels dessen entweder ein weiterer Werkzeugspeicher (analog zu dem in der Darstellung gezeigten Werkzeugspeicher 13) montiert werden kann, oder über ein entsprechendes Einspannmittel wie etwa eine (nicht dargestellte) Werkzeug-Schnittstelle zum direkten Aufspannen eines Werkzeugs auf dieser Palette 32, ein entsprechendes weiteres Werkzeug. Über den in Figur 4b dargestellten Rundspeicher 40 ist es möglich, andere Paletten 41 in kurzer Folge in die erfindungsgemäße Werkzeugmaschine einzuwechseln, um auf diese Weise eine automatisierte Zustellung von mit Werkzeugen (nicht gezeigt) vorbestückten Paletten über den Palettenwechsler 32 zu realisieren.

Die Erfindung ist dabei natürlich nicht auf Paletten als wechselbare Werkzeugträger reduziert, es können ebenso gut herkömmliche Werkzeugträger eingesetzt werden, die über Aufspannmittel verfügen, um einen erfindungsgemäßen Werkzeugspeicher darauf zu befestigen.

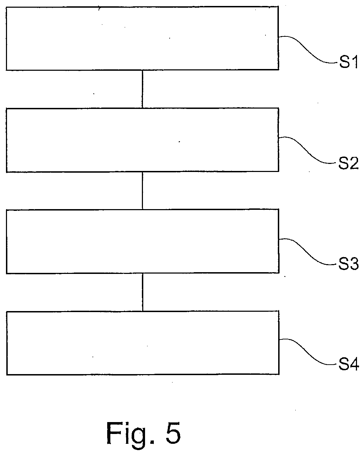

Fig. 5 zeigt ein Ausführungsbeispiel eines erfindungsgemäßen Verfahrens mit den Schritten S1 Bereitstellen einer Vielzahl von Werkstücken in einem Magazin und Einwechseln eines der Werkstücke in die Arbeitsspindel der Werkzeugmaschine in Schritt S2. In Schritt S3 erfolgt das Bereitstellen eines auf einen Maschinentisch der Werkzeugmaschine montierten Werkzeugspeichers mit einer Mehrzahl von Werkzeugen, und in Schritt S4 erfolgt das Bearbeiten des in der Arbeitsspindel eingespannten Werkstücks mit einem der in dem Werkzeugspeicher gespeicherten Werkzeuge.

Die obige Beschreibung der Erfindung in ihrer allgemeinen Form und anhand der Ausführungsbeispiele zeigen deutlich, wie durch die Erfindung das Konzept der fünf Achsbearbeitungen von Werkstücken an der Werkzeugmaschine eine deutliche Erweiterung erfährt, was die Möglichkeiten der Positionierbarkeit von Werkzeug bzw. Werkstück bei gleichzeitig reduzierten Verfahrwegen anbetrifft. Dies wird erreicht durch die Kombination der so genannten "umgekehrten Einspannung von Werkstück in Arbeitsspindel und Werkzeug auf dem Maschinentisch" mit dem erfindungsgemäßen Werkzeugspeicher, der den in dem Bereich des Maschinentisches zur Verfügung stehenden Raumes konsequent nutzt, um die konstruktiven Voraussetzungen für eine Bereitstellung unterschiedlicher Werkzeuge in verschiedenen Orientierung zu ermöglichen. Unter Hinzunahme der weiteren erfindungsgemäßen Optionen der Miteinbeziehung eines Palettenwechslers mit auf der Palette aufgespanntem Werkzeugspeicher bzw. eines Radmagazins werden die Möglichkeit der Bearbeitung in zeiteffizienter Weise bei verkürzten Zustellwegen weiter vergrößert, so dass in der industriellen Fertigung an der erfindungsgemäßen Werkzeugmaschine eine erhebliche Reduktion der Bearbeitungsdauer realisiert werden kann.

## Patentansprüche

1. Werkzeugmaschine zur spanabhebenden Bearbeitung eines Werkstücks mittels eines Werkzeuges, wobei die Werkzeugmaschine dazu eingerichtet ist, das Werkzeug für die maschinengesteuerte Bearbeitung im Rahmen eines Bearbeitungsprogramms an der Arbeitsspindel einzuspannen und das Werkstück auf dem Maschinentisch der Werkzeugmaschine aufzuspannen, **gekennzeichnet durch**
einen auf dem Maschinentisch befestigbaren Werkzeugspeicher, auf oder an dem ein Werkzeug einzeln oder eine Mehrzahl an Werkzeugen einzeln auswechselbar aufspannbar sind.

2. Werkzeugmaschine nach Patentanspruch 1, **dadurch gekennzeichnet, dass** der Werkzeugspeicher so aufgebaut ist, dass unterschiedliche Werkzeuge in verschiedenen Richtungen auf dem Werkzeugspeicher aufgespannt werden können.

3. Werkzeugmaschine nach Patentanspruch 2, **dadurch gekennzeichnet, dass** der Werkzeugspeicher einen im Wesentlichen recht eckigen oder würfelförmigen Grundkörper aufweist, an dessen Außenflächen Spannmittel zum Aufspannen des oder der Werkzeuge vorgesehen sind.

4. Werkzeugmaschine nach einem der vorhergehenden Ansprüche, **dadurch gekennzeichnet, dass** der Werkzeugspeicher mindestens ein Antriebsmittel umfasst, mittels dessen oder derer einzelne oder mehrere Werkzeuge unabhängig von der Bewegung des Maschinentisch angetrieben werden können.

5. Werkzeugmaschine nach Patentanspruch nach einem der vorhergehenden Ansprüche, **dadurch gekennzeichnet, dass** der Werkzeugspeicher eine aufspannbare Palette umfasst.

6. Werkzeugmaschine nach Patentanspruch 5, **dadurch gekennzeichnet, dass** die Werkzeugmaschine ferner einen Palettenwechsler und ein Palettenmagazin, insbesondere einen Rund- oder einen Linearspeicher aufweist, so dass über den Palettenwechsler in Verbindung mit dem Rund- oder Linearspeicher eine automatisierte Einwechslung einer Vielzahl von Werkzeugen, die auf der Palette vorgespannt sind, erfolgen kann.

7. Werkzeugmaschine nach Patentanspruch nach einem der vorhergehenden Ansprüche, **dadurch gekennzeichnet, dass** der Maschinentisch ein Schwenkrundtisch ist.

8. Werkzeugmaschine nach Patentanspruch nach einem der vorhergehenden Ansprüche, **dadurch gekennzeichnet, dass** die Werkzeugmaschine ferner ein Radmagazin aufweist, das zur Speicherung einer Vielzahl von Werkstücken eingerichtet ist und eine Wechseleinrichtung, mittels derer die Werkstücke aus dem Radmagazin in die Arbeitsspindel ein- und ausgewechselt werden können.

9. Werkzeugmaschine nach Patentanspruch 8 **dadurch gekennzeichnet, dass** das Radmagazin ferner zur Aufnahme von Werkzeugen eingerichtet ist und die Wechseleinrichtung ferner dazu konfiguriert ist, Werkzeuge aus dem Radmagazin in die Arbeitsspindel ein- und auszuwechseln.

10. Werkzeugmaschine nach Patentanspruch nach einem der vorhergehenden Ansprüche, **dadurch gekennzeichnet, dass** die Werkzeugmaschine dazu eingerichtet ist, das Werkstück an der Arbeitsspindel über eine Werkzeugschnittstelle, insbesondere eine HSK-Schnittstelle, zu befestigen.

11. Verfahren zur Bearbeitung eines Werkstücks an einer Werkzeugmaschine mit den Schritten:
- Bereitstellen einer Vielzahl von Werkstücken in einem Magazin,
- Einwechseln eines der Werkstücke in die Arbeitsspindel der Werkzeugmaschine,
- Bereitstellen eines auf einem Maschinentisch der Werkzeugmaschine montierten Werkzeugspeichers mit einem Werkzeug oder einer Mehrzahl von Werkzeugen
- und Bearbeiten des in der Arbeitsspindel eingespannten Werkstücks mit einem oder sukzessive mit mehreren der in dem Werkzeugspeicher gespeicherten Werkzeuge.

12. Verfahren zur Bearbeitung eines Werkstücks an einer Werkzeugmaschine nach Patentanspruch 11, **dadurch gekennzeichnet, dass** zum Wechseln der Werkzeuge der Werkzeugspeicher mit den darin gespeicherten Werkzeugen mittels eines Palettenwechslers gegen einen weiteren Werkzeugspeicher mit darin gespeicherten Werkzeugen gewechselt wird.

13. Verfahren zur Bearbeitung eines Werkstücks an einer Werkzeugmaschine nach Patentanspruch 11 oder 12, **dadurch gekennzeichnet, dass** in dem Magazin neben den Werkstücken auch Werkzeuge gespeichert sind und dass über ein Handhabungsgerät in wechselnder Folge Werkstücke und Werkzeuge in die Arbeitsspindel eingewechselt werden und dass in dem Werkzeugspeicher neben Werkzeugen auch Werkstücke gespeichert sind und dass das Verfahren den Schritt umfasst Bearbeitung eines in dem Werkzeugspeicher aufgespannten Werkstücks über ein in der Arbeitsspindel bereitgestelltes Werkzeug.
